# EUROPÄISCHE PATENTSCHRIFT

(11) **EP 2 621 610 B1**
(45) Veröffentlichungstag und Bekanntmachung des Hinweises auf die Patenterteilung: **22.08.2018**
(21) Anmeldenummer: 11764168.8
(22) Anmeldetag: 30.09.2011
(51) Int. Cl.: B01D 53/22, B01D 69/02, B01D 71/02, B01D 69/10, B01D 67/00

(54) **VERFAHREN ZUR HERSTELLUNG VON KOHLENSTOFFMEMBRANEN**
METHOD FOR PRODUCING CARBON MEMBRANES
PROCÉDÉ DE PRODUCTION DE MEMBRANES DE CARBONE

(30) Priorität: 01.10.2010 EP 10186168
(43) Veröffentlichungstag der Anmeldung: 07.08.2013
(73) Patentinhaber: BASF SE, 67056 Ludwigshafen am Rhein (DE)
(72) Erfinder: VOSS, Hartwig, 67227 Frankenthal (DE); THERRE, Jörg, 67551 Worms (DE); KALTENBORN, Nadine, 52072 Aachen-Richterich (DE); RICHTER, Hannes, 07629 Hermsdorf (DE); VOIGT, Ingolf, 07743 Jena (DE)
(74) Vertreter: BASF IP Association
(86) Internationale Anmeldenummer: PCT/EP2011/067073
(87) Internationale Veröffentlichungsnummer: WO 2012/041999

(56) Entgegenhaltungen:
- EP-A1- 2 045 001
- WO-A1-00/53299
- WO-A1-01/97956
- WO-A2-00/62885
- JP-A- 10 052 629

## Beschreibung

Die Erfindung betrifft Verfahren zur Herstellung von Kohlenstoffmembranen, die zur Gastrennung geeignet sind. Der Einsatz von Kohlenstoffmembranen zur Gastrennung ist an sich bekannt. Dabei wird der Schichtebenen-Abstand des Graphits, der mit 3,35 Å im Größenordnungsbereich kleiner Gasmoleküle liegt, ausgenutzt.

Der durch die Pyrolyse von organischen Materialien synthetisierte Kohlenstoff wird als parakristalliner Kohlenstoff bezeichnet, da er mehr oder weniger starke Abweichung von der idealen Kristallstruktur zeigt. Er besitzt kleine periodische Bereiche, zeigt aber diffuse Röntgenreflexe und wird deshalb als röntgenamorph bezeichnet. Glasartiger mikroporöser Kohlenstoff besitzt mit 1,2 - 1,6 g/cm³ eine geringere Dichte als kristalliner Graphit mit 2,2 g/cm³ und eine enge Porengrößen-Verteilung. Aufgrund des hohen Anteils an offener Porosität eignet sich der Kohlenstoff ausgezeichnet als Adsorbens.

Amorphe oder mikrokristalline Kohlenstofffilme besitzen hohe chemische Inertheit. Sie bestehen aus sp²- und sp³-Bindungen und zeigen daher Eigenschaften, die zwischen denen von Graphit und Diamant liegen. Die graphitähnlichen Strukturen bestehen aus einer trubostratisch fehlgeordneten Schichtenfolge, in der die Mikrokristallite durch stark deformierte und fehlorientierte Graphitschichten verknüpft sind.

Über die genauen Bindungsverhältnisse im röntgenamorphen Kohlenstoff wurden in der Vergangenheit unterschiedliche Thesen aufgestellt. Robertson und O'Reilly haben ein Modell propagiert, in dem amorpher Kohlenstoff aus sp²-Bindungsclustern besteht, die über sp³-Bindungen miteinander vernetzt sind. Côté und Liu hingegen haben die These vertreten, dass amorpher Kohlenstoff allein aus sp²-Bindungen besteht, die dreidimensional vernetzt sind. Experimente haben die Vermutung von dispergierten quervernetzten sp²-Bindungen gestützt. Im amorphen und nanokristallinen Kohlenstoff liegt nach Lossy et al. eine Mischung aus sp²- und sp³-Bindungstypen vor. Wenn diese Cluster groß genug werden können nanokristalline Graphit- und Diamantstrukturen entstehen.

Beim Einsatz von nanoporösem Kohlenstoff als Membranwerkstoff können hohe Permeanzen mit gleichzeitig hoher Selektivität erreicht werden. Die Gaspermeation in Kohlenstoffmembranen ist einfacher als in Polymermembranen, da sich die Gase nicht im Kohlenstoff lösen. Man unterscheidet zwei Arten von Kohlenstoffmembranen: Die molsiebende Kohlenstoffmembran (molecular sieve carbon membrane MSCM) und die adsorptionsselektive Kohlenstoffmembran (adsorptive selective carbon membrane ASCM). MSCM erlauben die Trennung von Gasgemischen mit unterschiedlichen Moleküldurchmessern auf Grund des Größenausschlusses der größeren Molekülsorte.

Im Gegensatz dazu erlauben ASCM die Trennung von Gasgemischen mit ähnlichen Molekülradien oder sogar die Abtrennung größerer von kleineren Molekülen.

Dem Permeationsverhalten adsorbierbarer und nichtadsorbierbarer Gase liegen unterschiedliche Mechanismen zugrunde. Während die Permeation von nicht adsorbierenden Gasen im Idealfall als reine Gasdiffusion verstanden werden kann, wird die Permeation von adsorbierbaren Gasen von Oberflächendiffusionsprozessen bestimmt. In Gemischen aus adsorbierbaren und nichtadsorbierbaren Gasen wird die Permeation der nicht adsorbierenden Komponente durch die adsorbierten Gasmoleküle behindert. Die nicht adsorbierenden Gase müssen für die Diffusion durch die Membran zunächst eine Potentialbarriere überwinden. In der Realität treten Gasdiffusion und Oberflächendiffusion stets gleichzeitig auf. Die Trennung funktioniert durch die selektive Adsorption und Oberflächendiffusion einer Komponente auf die Niederdruckseite der Membran, wo sie schließlich desorbieren.

Abhängig vom Syntheseprozess wie Sinterung und milden Aktivierungsprozessen liegen die Porengrößen der MSCM im Bereich zwischen 2,8 - 5,2 Å. Die Porengrößen in ASCM sind mit 5 - 7 Å geringfügig größer.

Ein weiterer entscheidender Vorteil des Kohlenstoffs ist die Möglichkeit einer gezielten Einstellung der Porengröße durch thermochemische Behandlung, die es ermöglicht, aus dem gleichen Ausgangmaterial Membranen mit unterschiedlichen Permeations- und Trenneigenschaften herzustellen. Kohlenstoffmembranen besitzen eine hohe chemische Beständigkeit gegenüber Säuren, Laugen und organischen Lösungsmitteln. Nanoporöse Kohlenstoffmembranen können im Vergleich zu Polymermembranen unter nichtoxidierenden Bedingungen bei hohen Temperaturen von bis zu 900 °C eingesetzt werden.

Ein Nachteil des Kohlenstoffs liegt in seiner begrenzten Beständigkeit gegenüber oxidierenden Medien und Wasserdampf. Außerdem sind Kohlenstoffmembranen brüchiger als Polymermembranen und können durch adsorbierende Gase wie z. B. Chlorgas verblocken. Die adsorbierten Gasmoleküle lassen sich bei Temperaturen ≥ 200 °C wieder entfernen. Die bevorzugten Prozesstemperaturen sollten daher in diesem Bereich liegen.

Einer der ersten Vertreter der Gruppe der glasartigen Kohlenstoffe ist die "Cellulose-Kohle", die durch pyrolytische Umwandlung von Cellulose in Kohlenstoff bei definierter Temperaturbehandlung entsteht.

Die Herstellung von Kohlenstofffasermembranen aus Cellulose-Fasern durch Pyrolyse ist beispielsweise in der EP-A-0 671 202 beschrieben.

Die WO 00/62885 beschreibt den Einsatz polymerer phenolischer Harze zur Ausbildung von Kohlenstoffmembranen, die zur Gastrennung geeignet sind. Die phenolischen Harze werden dabei in Methanol gelöst.

Die WO 01/97956 beschreibt die Herstellung nanoporöser Kohlenstoffmembranen durch Pyrolyse von ausgewählten Polymeren auf porösen Substraten. Als bevorzugte Polymere werden Polyfurfurylalkohol, Polyvinylchlorid und Polyacrylnitril genannt. Diese werden mit Additiven, vorzugsweise Titandioxid, Siliciumdioxid-Zeolithen oder Polyethylenglykol vermischt und auf ein Substrat aufgetragen. Daran schließt sich die Pyrolyse an.

Die EP-A-2 045 001 beschreibt den Einsatz von Phenolharzen, Melaminharzen, Harnstoffharzen, Furanharzen, Polyimidharzen oder Epoxidharzen sowie von Polyethylen und Cellulose basierten Harzen, gelöst in organischen Lösungsmitteln, zur Herstellung von Kohlenstoffmembranen durch Filmbildung und nachfolgende Pyrolyse des Harzes. Darüber hinaus beschreibt EP-A-2 045 001 den Aufbau der Kohlenstoffmembran bestehend aus einem porösen Substrat, darauf folgenden porösen Keramikschichten und der Kohlenstoffschicht, wobei die letzte Zwischenschicht, auf die die Kohlenstoffmembran aufgebracht wird, aus einem TiO₂-Sol hergestellt wird und einen Porendurchmesser zwischen 0,3 und 10 nm aufweist. Weiterhin wurde die Membran nur für die Trennung von Wasser und Ethanol durch Pervaporation bei 75°C getestet. Diese Prüfung lässt eine Eignung für die Gastrennung bei höheren Temperaturen nicht zu. WO 00/53299 offenbart die Herstellung einer Kohlenstoffmembran aus einem Furfurylalkoholharz.

JP10052629 offenbart die Herstellung von Kohlenstoffmembranen aus pyrolisierter Polymerlösung auf einem keramischen Träger. Vor dem Pyrolyseschritt werden die Polymermembranen oft einer physikalischen oder chemischen Vorbehandlung unterzogen. Unter physikalischer Vorbehandlung versteht man beispielsweise das Strecken von Hohlfasern. Zu den chemischen Behandlungsverfahren zählt beispielsweise die Behandlung mit Carbonisierungskatalysatoren wie Mineralsäuren oder die Behandlung mit Chemikalien wie Dimethylformamid zur Erzielung enger Porengrößenverteilungen. Eine weitere Vorbehandlungsmethode stellt die Behandlung an oxidierender Atmosphäre wie Luft bei erhöhter Temperatur dar.

Durch die Pyrolyse der synthetischen Polymere unter Inertgasatmosphäre entsteht hochporöser Kohlenstoff, dessen Porengrößen in Abhängigkeit der Art und Morphologie des Polymers und der Pyrolysebedingungen stark variieren können. Durch kontrollierte Wärmebehandlung kann die Porengröße der Kohlenstoffmembranen eingestellt werden. Die Pyrolysebedingungen haben einen wichtigen Einfluss auf die Trenneigenschaften des Kohlenstoffs. Aufheizrate, Pyrolysetemperatur und Pyrolysedauer sind definiert einstellbare Größen. Durch Zufuhr thermischer Energie werden die Bindungen im Polymer aufgebrochen, und es kommt zur Ausbildung der Kohlenstoffmembran.

Die bekannten Membranen weisen noch nicht für alle Trennaufgaben ein geeignetes Eigenschaftsprofil auf. Teilweise können die Membranen nicht in reproduzierbarer Weise hergestellt werden, d. h. die Membraneigenschaften variieren je nach Charge.

Aufgabe der vorliegenden Erfindung ist die Bereitstellung eines Verfahrens zur Herstellung von Kohlenstoffmembranen, die zur Gastrennung geeignet sind, wobei die erhaltenen Membranen die Nachteile des Standes der Technik vermeiden sollen und hervorragende Trenneigenschaften bei bester Reproduzierbarkeit zeigen sollen.

Als hervorragende Trenneigenschaften für die Wasserstoffabtrennung aus einem Gasgemisch bei Temperaturen zwischen 150 bis 450°C sind aus Gemischgasmessungen ermittelte Wasserstoffpermeanzen von ≥ 2 Nm³/m²/h/bar und Wasserstoffpermselektivitäten ≥ 30 anzusehen.

| | |
|---|---|
| Definition Permeanz: | Fluss in Normkubikmeter Gas pro m² Membranfläche, Zeit und Druck, wobei als Druck (Triebkraft) die Partialdruckdifferenz zwischen Feed/Retentat und Permeat des entsprechenden Gases eingesetzt wird. |
| Definition Permselektivität: | Die Permselektivität ergibt sich dann aus dem Verhältnis der ermittelten Permeanzen. |

Die Aufgabe wird gelöst durch ein Verfahren wie in Anspruch 1 definiert, zur Herstellung von Kohlenstoffmembranen, die zur Gastrennung geeignet sind, umfassend die Schritte
a) Beschichten eines porösen Substrats, das eine oberflächliche mesoporöse, keramische Oxidschicht auf einer darunter liegenden Substratträgerschicht aufweist, mit einer Lösung mindestens eines organischen Polymers, das durch Pyrolyse in eine Kohlenstoffmembran überführt werden kann, wobei die oberflächliche mesoporöse, keramische Oxidschicht in ungebrannter Form mit der Lösung des mindestens einen organischen Polymers beschichtet wird, wobei die oberflächliche mesoporöse, keramische Oxidschicht aus ZrO₂, Al₂O₃ oder Mischungen daraus aufgebaut ist und als Polymer ethylenisch ungesättigte Polyester oder deren Gemische eingesetzt werden und zusätzlich ein vernetztendes ethylenisch ungesättigtes Monomer als Lösungsmittel und ein Radikalbildner als Vernetzungsinitiator eingesetzt werden,
b) Trocknen der Polymerbeschichtung auf dem porösen Substrat durch Entfernen des Lösungsmittels,
c) Pyrolysieren der Polymerbeschichtung auf dem porösen Substrat zur Ausbildung der Kohlenstoffmembran, die zur Gastrennung geeignet ist,
wobei jeder der Schritte a) bis c) oder die Sequenz der Schritte a) bis c) mehrfach durchgeführt werden kann und die Pyrolyse in Schritt c) bei einer Temperatur erfolgt, die höher als die Einbrenntemperatur des porösen Substrats ist, wobei erst in der nachfolgenden Pyrolyse die oberflächliche mesoporöse, keramische Oxidschicht eingebrannt wird und wobei die Pyrolyse in Schritt c) bei Temperaturen im Bereich von 500 bis 900°C durchgeführt wird.

Es wurde erfindungsgemäß gefunden, dass besonders vorteilhafte Kohlenstoffmembranen erhalten werden, wenn die Pyrolyse des organischen Polymers bei einer Temperatur erfolgt, die höher als die Einbrenntemperatur des porösen Substrats ist.

Als Einbrenntemperatur des porösen Substrats wird die Einbrenntemperatur der obersten Substratschicht bezeichnet, auf die die Lösung des mindestens einen organischen Polymers aufgebracht wird. Unter "Einbrenntemperatur" wird dabei die Temperatur verstanden, bei der diese oberste Schicht des Substrats in die Form überführt wird, in der sie auch in der späteren Kohlenstoffmembran vorliegt.

Anorganische Membranen besitzen in der Regel einen asymmetrischen Aufbau. Auf einen grobporösen Träger werden Zwischenschichten mit abnehmender Porengröße aufgebracht, bevor die eigentliche Beschichtung mit der trennaktiven Membranschicht auf Basis des organischen Polymers erfolgt. Nur so gelingt es in der Regel, sehr dünne und damit hochpermeable Membranschichten herzustellen. Dabei werden die einzelnen Zwischenschichten in separaten Temperschritten eingebrannt, wobei die Temperatur von Beschichtung zu Beschichtung geringer ist. Dies ist notwendig, um eine Schwindung und Änderung der Porengröße und Porosität der darunter liegenden Schichten zu vermeiden, die zur Ausbildung von Spannungen führen würden und Defekte zur Folge haben können.

Im Gegensatz dazu wurde gefunden, dass Kohlenstoffmembranen mit hervorragenden Trenneigenschaften erhalten werden, wenn die Pyrolysetemperatur der Kohlenstoffmembran höher liegt, als die Einbrenntemperatur der obersten Substratschicht. Das poröse Substrat weist eine oberflächliche mesoporöse, keramische Oxidschicht auf einer darunter liegenden Substratträgerschicht auf, wobei die oberflächliche mesoporöse, keramische Oxidschicht eine Einbrenntemperatur aufweist, die entsprechend unterhalb der Pyrolysetemperatur des organischen Polymers liegt.

Vorzugsweise weist diese oberflächliche mesoporöse, keramische Oxidschicht einen mittleren Porendurchmesser im Bereich von 2 bis 10 nm auf.

Vorzugsweise wird die oberflächliche mesoporöse, keramische Oxidschicht durch Sol-Gel-Technik hergestellt. Entsprechende Sol-Gel-Verfahren sind dem Fachmann bekannt.

Die Substratträgerschicht kann dabei aus beliebigen geeigneten Materialien ausgewählt sein. Vorzugsweise ist sie ausgewählt aus porösen Metallen, porösen Keramiken, porösen Gläsern oder porösen Kompositen daraus.

Die oberflächliche mesoporöse, keramische Oxidschicht ist dabei aus ZrO₂, Al₂O₃, oder Mischungen daraus aufgebaut. Besonders bevorzugt ist die oberflächliche mesoporöse, keramische Oxidschicht aus γ-Al₂O₃ aufgebaut. Die oberflächliche mesoporöse, keramische Oxidschicht wird in ungebrannter Form mit der Lösung des mindestens einen organischen Polymers beschichtet. Erst in der nachfolgenden Pyrolyse wird dann diese oberflächliche mesoporöse, keramische Oxidschicht eingebrannt.

Die Pyrolyse wird dabei bei Temperaturen im Bereich von 500 bis 900°C durchgeführt.

Bei der Herstellung der erfindungsgemäßen Kohlenstoffmembranen finden aufgrund ihrer hohen mechanischen und thermischen Stabilität besonders bevorzugt poröse keramische Träger Verwendung. Die oberste, engporigste Zwischenschicht ist eine mesoporöse Oxidschicht. Gemäß IUPAC-Definition beträgt die Porengröße in einer mesoporösen Schicht 2 bis 50 nm. Besonders bevorzugt weist die oberste Schicht, die oberflächliche mesoporöse, keramische Oxidschicht, einen mittleren Porendurchmesser im Bereich von 2 bis 10 nm auf.

Auf dieser Zwischenschicht wird als Vorstufe (Precursor) eine Polymerlösung aufgebracht. Das Polymer wird getrocknet, gegebenenfalls bei leicht erhöhter Temperatur vernetzt und anschließend durch Temperung bzw. Pyrolyse in die Kohlenstoffmembran umgewandelt (pyrolysiert). Die Pyrolyse wird besonders bevorzugt bei einer Temperatur im Bereich von 600 bis 800°C durchgeführt.

Bei der Verwendung mesoporöser Oxidschichten für die Herstellung von Kohlenstoffmembranen wurde erfindungsgemäß gefunden, dass sich die Trenneigenschaften der Membran verbessern, wenn die Pyrolyse bei höherer Temperatur stattfindet, als die Einbrenntemperatur der mesoporösen Oxidschicht ist. Die besten Ergebnisse wurden erzielt, wenn auf das Einbrennen der mesoporösen Oxidschicht vor der Pyrolyse ganz verzichtet wurde.

Die weiteren Eigenschaften des porösen Substrats sind nachgehend näher erläutert. Das mindestens eine organische Polymer ist erfindungsgemäß ausgewählt aus ethylenisch ungesättigten Polyestern oder deren Gemische. Als ethylenisch ungesättigte Polyester können beliebige geeignete ethylenisch ungesättigte Polyester eingesetzt werden. Vorzugsweise weist der ethylenisch ungesättigte Polyester Wiederholeinheiten aliphatischer Diole, aromatischer Dicarbonsäuren und ethylenisch ungesättigter Dicarbonsäuren auf. Der erfindungsgemäß eingesetzte ethylenisch ungesättigte Polyester kann dabei ausgehend von aliphatischen Diolen, aromatischen Dicarbonsäureanhydriden und ethylenisch ungesättigten Dicarbonsäureanhydriden hergestellt werden.

Die aliphatischen Diole sind vorzugsweise C₂₋₁₂-Alkandiole, besonders bevorzugt C₂₋₆-Alkandiole, insbesondere C₂₋₄-Alkandiole. Dabei kann es sich um lineare oder verzweigte Alkandiole handeln, in denen die Hydroxylgruppen endständig oder nicht endständig sind. Bevorzugt werden lineare aliphatische Alkandiole eingesetzt, in denen die Hydroxylgruppen endständig oder nicht endständig sind. Speziell bevorzugt wird 1,2-Propandiol als Alkandiol eingesetzt.

Die ethylenisch ungesättigte Dicarbonsäure ist vorzugsweise Maleinsäure. Sie wird insbesondere zur Herstellung des ethylenisch ungesättigten Polyesters in Form von Maleinsäureanhydrid eingesetzt.

Die aromatischen Dicarbonsäuren können aus beliebigen geeigneten aromatischen Dicarbonsäuren ausgewählt sein. Es kann sich beispielsweise um Phthalsäure, Isophthalsäure oder Terephthalsäure handeln. Bevorzugt ist die aromatische Dicarbonsäure Phthalsäure, die zur Herstellung der ethylenisch ungesättigten Polyester als Phthalsäureanhydrid eingesetzt wird.

Im ethylenisch ungesättigten Polyester können Diole und Dicarbonsäuren in äquivalenten Mengen vorliegen. Vorzugsweise wird mit einem geringfügigen Diol-Überschuss gearbeitet, so dass die erhaltenen Polyester mehr Alkoholendgruppen als Carbonsäure-Endgruppen aufweisen. Der Überschuss an Diol gegenüber Dicarbonsäure kann 1 bis Gew.-20 %, vorzugsweise 2 bis 10 Gew.-%, insbesondere 3 bis 7 Gew.-% betragen.

Aromatische Dicarbonsäuren und ethylenisch ungesättigte Dicarbonsäuren können in beliebigen geeigneten Molverhältnissen eingesetzt werden. Vorzugsweise werden aromatische Dicarbonsäuren und ethylenisch ungesättigte Dicarbonsäuren im Molverhältnis 0,1 : 1 bis 1 : 0,1, besonders bevorzugt 0,3 : 1 bis 1 : 0,3, insbesondere 0,09 : 1 bis 1 : 0,9 eingesetzt. Besonders bevorzugt wird mit äquimolaren Mengen an aromatischen Dicarbonsäuren und ethylenisch ungesättigten Dicarbonsäuren gearbeitet.

Aus den genannten Monomeren werden die ethylenisch ungesättigten Polyester unter den üblichen Bedingungen hergestellt, wobei die ethylenisch ungesättigten Gruppen der ethylenisch ungesättigten Dicarbonsäuren weitgehend erhalten bleiben sollen. Für die Herstellung der ethylenisch ungesättigten Polyester kann beispielsweise auf bekannte Verfahren verwiesen werden.

Erfindungsgemäß bevorzugt eingesetzte, ethylenisch ungesättigte Polyester weisen ein Molekulargewicht im Bereich von 100 bis 2000 g/mol, besonders bevorzugt 200 bis 600 g/mol, auf. Die Viskosität der Polyester beträgt vorzugsweise 4 bis 200 mPas, besonders bevorzugt 10 bis 40 mPas. Die Lösung ethylenisch ungesättigter Polyester enthält erfindungsgemäß zusätzlich ein vernetzendes ethylenisch ungesättigtes Monomer und einen Radikalbildner als Vernetzungsinitiator. Das vernetzende ethylenisch ungesättigte Monomer ist dabei vorzugsweise Styrol oder α-Methylstyrol. Als Radikalbildner können alle radikalischen Polymerisationsinitiatoren eingesetzt werden. Beispielsweise kann Dibenzoylperoxid als Radikalbildner eingesetzt werden. Beim Auftragen der Lösung ethylenisch ungesättigter Polyester auf das poröse Substrat ist der Polyester vorzugsweise noch nicht vernetzt oder höchstens so teilvernetzt, dass seine Fließfähigkeit erhalten bleibt.

Als Lösungsmittel kommen alle für Polyester geeigneten Lösungsmittel in Betracht, vorzugsweise Styrol, α-Methylstyrol und Aceton.

Gemäß der Erfindung wird das vernetzende ethylenisch ungesättigte Monomer als Lösungsmittel eingesetzt, d. h. bei Mitverwendung des ethylenisch ungesättigten Monomeren wird auf ein weiteres Lösungsmittel verzichtet. Bei geeigneter Einstellung der Viskosität des ethylenisch ungesättigten Polyesters kann ebenfalls gemäß einer Ausführungsform der Erfindung auf den Zusatz eines Lösungsmittels verzichtet werden. Dies ist insbesondere dann der Fall, wenn der ethylenisch ungesättigte Polyester bei Umgebungstemperatur (22 °C) fließfähig ist.

Besonders bevorzugt wird der ethylenisch ungesättigte Polyester zusammen mit dem vernetzenden ethylenisch ungesättigten Monomer ohne den Zusatz weiterer Lösungs- oder Verdünnungsmittel in der Beschichtung in Schritt a) eingesetzt.

Dabei beträgt der Anteil des vernetzenden, ethylenisch ungesättigten Monomeren am Gemisch aus ethylenisch ungesättigtem Polyester und ethylenisch ungesättigtem Monomer vorzugsweise 0,1 bis 5 Gew.-%, besonders bevorzugt 0,2 bis 2 Gew.-% oder vorzugsweise 20 bis 90 Gew.-%, besonders bevorzugt 40 bis 80 Gew.-%.

Allgemein wird als Lösungsmittel für die organischen Polymere ein organisches Lösungsmittel eingesetzt, vorzugsweise Styrol, α-Methylstyrol und/oder Aceton.

Die Konzentration des organischen Polymers in der Lösung beträgt vorzugsweise 20 bis 95 Gew.-% oder 10 bis 80 Gew.-%, besonders bevorzugt 40 bis 70 Gew.-% oder 20 bis 60 Gew.-%.

Das poröse Substrat kann durch beliebige geeignete Beschichtungsverfahren mit der Lösung der Polymere, vorzugsweise der ethylenisch ungesättigten Polyester, beschichtet werden. Die Lösung kann durch Eintauchen, Aufsprühen, Imprägnierungsverfahren usw. aufgebracht werden. Bevorzugt wird ein Dipcoating-Verfahren zum Aufbringen der Lösung ethylenisch ungesättigter Polyester eingesetzt. Das Aufbringen des ethylenisch ungesättigten Polyesters kann ferner durch Ink-Coating und Ultraschallbeschichtung (Ultrasonic Deposition, UD) erreicht werden. Entsprechende Verfahren sind beispielsweise in EP-A-2 045 001 und WO 01/97956 beschrieben.

Nach dem Beschichten des porösen Substrats mit der Lösung des Polymers, z. B. des ethylenisch ungesättigten Polyesters, wird die Polyesterbeschichtung auf dem porösen Substrat getrocknet. Dabei wird gegebenenfalls vorhandenes Lösungsmittel entfernt. Bei der Mitverwendung eines vernetzenden ethylenisch ungesättigten Monomeren werden überschüssige Mengen dieses Monomers ebenfalls beim Trocknen entfernt. Das Trocknen wird vorzugsweise bei einer Temperatur im Bereich von 0 bis 70°C, besonders bevorzugt 17 bis 30°C, insbesondere bei Umgebungstemperatur (22 °C), für einen Zeitraum von 0,1 bis 50 Stunden, vorzugsweise 2 bis 24 Stunden, durchgeführt.

Vor dem Pyrolysieren in Schritt c) kann nach dem Trocknen b) oder als Teil des Trocknens ein Aushärten bei leicht erhöhten Temperaturen durchgeführt werden. Vorzugsweise wird bei Temperaturen im Bereich von 20 bis 150°C oder 50 bis 250°C, besonders bevorzugt 60 bis 100 °C für einen Zeitraum von 1 bis 100 Stunden, vorzugsweise 6 bis 24 Stunden oder 4,5 bis 20 Stunden, insbesondere 6 bis 12 Stunden, ausgehärtet. Bei der Aushärtung wird das Polymer, z. B. der ethylenisch ungesättigte Polyester, vernetzt. Die Vernetzung verhindert das Aufschmelzen und somit auch die Umstrukturierung des Polymers, z. B. des vernetzten Polyesters, in den energetisch günstigeren Zustand des Graphits.

Vor dem Pyrolyseschritt können die Polymermembranen auch einer physikalischen oder chemischen Vorbehandlung unterzogen werden. Zu den chemischen Vorbehandlungsverfahren zählen beispielsweise die Behandlung mit Carbonisierungskatalysatoren wie Mineralsäuren oder die Behandlung mit Chemikalien wie Dimethylformamid zur Erzielung enger Porengrößenverteilungen. Additive wie Polyethylenglykol, Lewis-Säuren und ionische Salze sind in der eingangs zitierten Literatur, insbesondere in EP-A-0 671 202 beschrieben. Eine derartige Vorbehandlung kann auch erfindungsgemäß erfolgen, ist oftmals jedoch nicht notwendig, da bereits durch Einsatz der erfindungsgemäß verwendeten Polyester eine geeignete Porengrößenstruktur erhalten wird. Weitere geeignete Porenbildner sind SO₃NH(C₂H₅)₃, Salpetersäuretriethylammoniumsalz und (-C(CF₃)₂-)Hexafluorisopropyliden-Gruppen. Über die Art und Menge der Porenbildner lässt sich die Permeabilität der Membran steuern.

Zum Zeitpunkt der Pyrolyse sind die erfindungsgemäß eingesetzten Polymere, vorzugsweise Polyester, vorzugsweise entweder schon quervernetzt oder härten im Niedertemperaturbereich der Pyrolyse aus. Vor der Vernetzung sollten vorzugsweise alle Lösungsmittel aus der Polymerbeschichtung entfernt werden, da diese beim Erhitzen zur Blasenbildung und zu Defekten in der Polymerschicht führen können. Vernetzungsgrad und Vernetzungstemperatur können einen Einfluss auf die Permeabilität und Selektivität der späteren Membran haben.

Das Pyrolysieren der Polymer-, vorzugsweise Polyesterbeschichtung, auf dem porösen Substrat zur Ausbildung der Kohlenstoffmembran in Schritt c), wird vorzugsweise unter Inertgas bei Temperaturen im Bereich von 500 bis 900 °C, besonders bevorzugt von 650 bis 750 °C durchgeführt. Dabei wird die Pyrolyse vorzugsweise für einen Zeitraum von 0,1 bis 24 Stunden, vorzugsweise 0,5 bis 17 Stunden, besonders bevorzugt 1 bis 10 Stunden, speziell 1 bis 2 Stunden, durchgeführt.

Unter Umständen kann es sinnvoll sein, die Pyrolyse in Gegenwart geringer Mengen sauerstoffhaltiger Gase durchzuführen. Erfindungsgemäß bevorzugt wird die Pyrolyse jedoch unter Inertgas, beispielsweise unter Stickstoff- und/oder Argonatmosphäre durchgeführt.

Durch die Pyrolyse entsteht hochporöser Kohlenstoff, dessen Porengrößen in Abhängigkeit der Art und Morphologie des Vorläufers und der Pyrolysebedingungen variiert werden können. Durch kontrollierte Wärmebehandlung kann die Porengröße der Kohlenstoffmembran eingestellt werden. Die Pyrolysebedingungen haben einen Einfluss auf die Trenneigenschaften der erhaltenen Kohlenstoffmembran. Aufheizrate, Pyrolysetemperatur und Pyrolysedauer sind dabei einstellbare Größen. Durch Zufuhr thermischer Energie werden die Bindungen im Polymer aufgebrochen. Während der Zersetzung des Polymers bildet sich eine Reihe von gasförmigen Nebenprodukten, wodurch ein starker Masseverlust eintritt.

Nach der Pyrolyse kann die erhaltene Kohlenstoffmembran, falls erforderlich und gewünscht, weiteren Behandlungsschritten unterzogen werden. Beispielsweise kann die Membran durch Wärmebehandlung an Luft bei Temperaturen von 100 °C bis 500 °C aktiviert werden. Auch eine Aktivierung in einem Kohlendioxid-Strom ist erfindungsgemäß möglich. Erfindungsgemäß bevorzugt wird jedoch keine derartige Nachbehandlung nach der Pyrolyse in Schritt c) durchgeführt, sondern die aus der Pyrolyse resultierenden Kohlenstoffmembranen sind direkt zur Gastrennung geeignet.

Die erfindungsgemäß erhaltene Kohlenstoffmembran weist vorzugsweise einen mittleren Porendurchmesser im Bereich von 0,1 bis 0,7 nm , besonders bevorzugt 0,25 bis 0,45 nm oder bis 0,4 nm, insbesondere 0,3 bis 0,4 nm auf. Diese Membranen lassen vorzugsweise nur Moleküle mit einem kleineren kinetischen Gasdurchmesser, die in das Porensystem der Membran eindringen können, passieren. Dabei handelt es sich insbesondere um Wasserstoff, Wasser, Ammoniak und Helium. Der Mechanismus der Trennung dieser Gase erfolgt dabei nicht über ein unterschiedliches Adsorptions- und Transportverhalten der zu trennenden Gase, sondern durch formselektive Trennung (Molecular Sieving). In diesem Fall ist gewährleistet, dass der Fluss der permeierenden Gase linear mit der treibenden Kraft ansteigt.

Besonders bevorzugt werden folgende Abtrennungen durch die erfindungsgemäß erhaltene Kohlenstoffmembran bewirkt, gegebenenfalls in Kombination mit chemischen Reaktionen zur Verschiebung des Gleichgewichts:
Abtrennung von Wasserstoff von Kohlenwasserstoffen ab C₁ aufwärts, beispielsweise bei Dehydrierungen.

Dabei werden erfindungsgemäß Anwendungstemperaturen im Bereich von 200 bis 500 °C angestrebt.

Die Kohlenstoffmembranen werden bevorzugt in Form von asymmetrischen Membranen hergestellt. Die Wahl des porösen Substrats (Trägers) hängt zum einen von der chemischen Reaktivität und Kompatibilität mit dem Kohlenstoff, der mechanischen Stabilität, aber auch von ökonomischen Faktoren wie Kosten und Verfügbarkeit ab. Als poröse Substrate eignen sich, wie vorstehend angegeben, poröse Werkstoffe wie poröse Metalle, poröse Keramiken, poröse Gläser oder poröse Komposite daraus. Das poröse Substrat weist eine mesoporöse keramische Oxidschicht aus TiO₂, Al₂O₃, oder Mischungen daraus auf, die mit der Lösung des ethylenisch ungesättigten Polyesters, beschichtet wird.

Besonders bevorzugt ist die mesoporöse, keramische Oxidschicht aus γ-Al₂O₃ aufgebaut.

Dabei weist die mesoporöse keramische Oxidschicht eine Einbrenntemperatur auf, die unterhalb der Pyrolysetemperatur in Schritt c) liegt. Diese mesoporöse, keramische Oxidschicht wird in ungebrannter Form mit der Lösung des ethylenisch ungesättigten Polyesters beschichtet, wobei das Brennen der mesoporösen keramischen Oxidschicht gleichzeitig mit der Pyrolyse erfolgt. Dies kann zu einem besonders vorteilhaften Eigenschaftsspektrum der erhaltenen Kohlenstoffmembran führen.

Beim Einsatz von Stahl als Trägermaterial zeigt sich der Vorteil einer standardisierten, gut beherrschbaren und reproduzierbaren Fertigung. Bei der Verwendung von Stahl ist es jedoch nicht möglich, poröse Träger aus einem Schichtverbund herzustellen, was hohe Permeabilitäten und Selektivitäten miteinander kombinieren ließe.

Daher sind Kohlenstoffmembranen auf keramischen porösen Trägern bevorzugt. Sie bestehen vorzugsweise aus einem Verbund immer feiner werdender Schichtdicken und Porengrößen. Da Defekte in der Oberfläche der Substrate Fehler in der Kohlenstoffmembran wie Nadelstiche hervorrufen können, die zum Verlust der Mol-siebenden Eigenschaften der Membran führen können, ist es vorteilhaft, durch Beschichtung des porösen Trägers mit Zwischenschichten die Oberflächentopographie und die Defektstruktur des Trägers zu reduzieren.

Der prinzipielle Aufbau der bevorzugten erfindungsgemäßen Membran ist in der EP-A-2 045 001 beschrieben. Es kann insbesondere auf die dortige Figur 1 mit den entsprechenden Erläuterungen in der Beschreibung verwiesen werden.

Auf dem bevorzugten grobporigen Al₂O₃-Träger liegt vorzugsweise nach einer kleinerporigen Schicht eine mesoporöse, keramische Oxidschicht aus γ-Al₂O₃ mit einem Porendurchmesser im Bereich von vorzugsweise 2 bis 10 nm , besonders bevorzugt 3 bis 7 nm, insbesondere bevorzugt 4 bis 6 nm . Die Schichtdicke dieser mesoporösen, keramischen Oxidschicht beträgt vorzugsweise 0,1 bis 10 µm, besonders bevorzugt 0,5 bis 5 µm, insbesondere 1 bis 2 µm, speziell 1 bis 1,5 µm.

Dadurch, dass der Porendurchmesser im porösen Substratquerschnitt zur Kohlenstoffmembran hin abnimmt, kann ein Druckverlust im porösen Substrat vermieden werden, bei gleichzeitiger Einstellung geeigneter Porengrößen in der Kohlenstoffmembran. Durch diese Auslegung der Membran können hohe Stoffflüsse durch die Membran bei der jeweiligen Trennaufgabe gewährleistet werden.

Die Erfindung wird durch die nachstehenden Beispiele näher erläutert.

### Beispiele

### Beispiel 1

Die Herstellung der Precursorlösung erfolgte durch Reaktion eines Diols mit mindestens einer ungesättigten Carbonsäure zu einem ungesättigten Polyester und anschließende Zugabe eines Olefins. Im konkreten Fall wurden in einem 250 ml Zweihalskolben 19,98 g 1,2-Propandiol (0,25 mol + 5 % Überschuss; VWR), 12,26 g Maleinsäureanhydrid (0,125 mol; VWR) und 18,52 g Phthalsäureanhydrid (0,125 mol; VWR) eingewogen. Anschließend wurden 0,01 g Hydrochinon (VWR) als Polymerisationsinhibitor zugesetzt, um vorzeitige Polymerisations- oder Vernetzungsvorgänge zu verhindern. Unter Stickstoff wurden die eingewogenen Rohstoffe mittels Ölbad auf eine Reaktionstemperatur von 200 °C erhitzt. Zur Kontrolle der Kettenbildung wurde in regelmäßigen Abständen die Säurezahl durch Titration mit KOH-Lösung bestimmt. Bei einer Säurezahl von ca. 50 wurde die Reaktion durch schnelles Abkühlen auf 140 °C abgebrochen. Mit Hilfe eines Tropftrichters wurden anschließend unter heftigem Rühren innerhalb von einer Minute 50 g Styrol als Vernetzer zugegeben. Das zugesetzte Styrol wurde vorher auf 50 °C erwärmt. Um eine vorzeitige Polymerisation des Polyester-Styrol-Gemisches zu verhindern, wurde die ungesättigte Polyesterharzlösung im Wasserbad auf Raumtemperatur abgekühlt. Danach wurde dem Polyester-Styrol-Gemisch 1 % Dibenzoylperoxid (VWR) als Radikalbildner zugesetzt und anschließend 5 Minuten bei Raumtemperatur gerührt.

Als Träger für die Membranen wurden keramische Einkanalrohre aus α-Al₂O₃ einer Länge von 105 mm mit einem Innendurchmesser von 7 mm und einem Außendurchmesser von 10 mm verwendet, die auf der Innenseite Zwischenschichten mit abnehmender Porengröße besaßen. Als oberste Zwischenschicht wurde ein Böhmit-Sol eingesetzt, das bei Raumtemperatur getrocknet wurde und bei 300°C, 500°C sowie 650°C gesintert wurde.

Diese wurde im Dipcoating-Verfahren mit der klaren, viskosen, leicht gelblich gefärbten Precursorlösung beschichtet. Dazu wurde die Lösung in das Rohr gefüllt und nach einer Verweilzeit von 1 Minute wieder abgepumpt. Die Probe wurde 24 h an Luft getrocknet und anschließend im Trockenschrank bei einer Temperatur von 80 °C für 12 h in m/A ausgehärtet und auf Raumtemperatur abgekühlt. Nach der Vernetzung des Polymers zum Duroplasten wurde die Schicht mit folgender Prozedur zu Kohlenstoff pyrolysiert:
1. Erhöhung der Temperatur mit 0,5 K/min von Raumtemperatur auf 380°C in Stickstoff
2. Haltezeit von 1 h bei 380°C in Stickstoff
3. Erhöhung der Temperatur mit 0,6 K/min von 380 auf 500°C in Stickstoff
4. Haltezeit von 10 min bei 500°C in Stickstoff
5. Wechsel der Atmosphäre von Stickstoff auf Argon
6. Erhöhung der Temperatur mit 1 K/min von 500°C auf die finale Pyrolysetemperatur in Argon
7. Haltezeit von 1 h bei der finalen Pyrolysetemperatur in Argon
8. Abkühlung mit 5 K/min von der finalen Pyrolysetemperatur auf 500°C in Argon
9. Wechsel der Atmosphäre von Argon auf Stickstoff
10. Abkühlung mit 5 K/min von 500°C auf Raumtemperatur in Stickstoff

Die Zusammensetzung des Polyesters, der Vernetzeranteil und die finalen Pyrolysetemperaturen sind der nachfolgenden Ergebnistabelle zu entnehmen. Die oberste Zwischenschicht wurde dabei in eine γ-Al₂O₃-Schicht mit einer Porengröße von 5 bis 9 nm und einer Dicke von 1 bis 2 µm umgewandelt. Das Beispiel PES-1 ist erfindungsgemäß, die weiteren Beispiele dienen dem Vergleich. Beispiel 2, nicht erfindungsgemäß Ein Böhmit-Sol wird mittels Dipcoating auf der Innenseite eines rohrförmigen asymmetrischen, keramischen Trägers, bestehend aus einem Verbund mehrerer Schichten mit abnehmender Porengröße, aufgebracht. Die Träger besitzen einen Innendurchmesser von 7 mm, einen Außendurchmesser von 10 mm und eine Länge von 105 mm. Nach der Beschichtung wird die Probe bei Raumtemperatur an Luft getrocknet und bei 300 °C, 500 °C sowie 800 °C gesintert. Die getrocknete bzw. die gesinterte Böhmitsolschicht wurde mittels Dipcoating mit dem Precursor geschichtet. Dazu wurde die Phenolharzlösung in das Membranrohr eingefüllt und nach einer Verweilzeit von 1 Minute wieder abgelassen. Für die Herstellung der Lösung wurden zwei Phenolharzpulver verwendet:

| ***Firma*** | ***Typ*** | ***mittleres Molgewicht*** | ***Hexaminanteil*** |
|---|---|---|---|
| FERS | FB8001 | 2685 g/mol | 8,9 % |
| HEXION | 0235DP | 900 g/mol | - |

Die Herstellung der Lösung erfolgte dadurch, dass zunächst 7,5 g Phenolharzpulver, in 22,5 g Methanol (MERCK) gelöst wurden. Danach wurden 20 g 1-Methyl-2-pyrrolidon (≥ 99,5 %, MERCK) als weiteres Lösungsmittel zugegeben. Nach der Beschichtung wird der Polymerfilm zur vollständigen Entfernung des Lösungsmittels an Luft bei Raumtemperatur für 24 Stunden getrocknet. Nach der Trocknung wird das Polymer im Trockenschrank bei Temperaturen von 150°C über einen Zeitraum von 3 Stunden zum Duroplasten quervernetzt und auf Raumtemperatur abgekühlt. Danach wurde die Schicht mit folgender Prozedur zu Kohlenstoff pyrolysiert:
1. Erhöhung der Temperatur mit 0,5 K/min von Raumtemperatur auf 380 °C in Stickstoff
2. Haltezeit von 1 h bei 380 °C in Stickstoff
3. Erhöhung der Temperatur mit 0,6 K/min von 380 auf 500 °C in Stickstoff
4. Haltezeit von 10 min bei 500 °C in Stickstoff
5. Wechsel der Atmosphäre von Stickstoff auf Argon
6. Erhöhung der Temperatur mit 1 K/min von 500 °C auf die finale Pyrolysetemperatur in Argon
7. Haltezeit von 1 h bei der finalen Pyrolysetemperatur in Argon
8. Abkühlung mit 5 K/min von der finalen Pyrolysetemperatur auf 500 °C in Argon
9. Wechsel der Atmosphäre von Argon auf Stickstoff
10. Abkühlung mit 5 K/min von 500 °C auf Raumtemperatur in Stickstoff

Der verwendete Phenolharztyp und die finalen Pyrolysetemperatur sind der nachfolgenden Ergebnistabelle 1 zu entnehmen. Im Pyrolyseschritt wird schließlich das Polymer auf der ungesinterten, keramischen Trägermembran mit einer Aufheizrate von 0,5 - 1 K/min bei Temperaturen zwischen 600°C und 900°C (speziell 800 °C) unter Inertgasatmosphäre (Stickstoff und/oder Argon) zu Kohlenstoff zersetzt.

Zur Charakterisierung der Trenneigenschaften der Kohlenstoffmembranen, die im Beispiel 1 und 2 hergestellt wurden, wurden an einem Gasmessstand Einzel- und Gemischgasmessungen bei einer Temperatur von 150 °C durchgeführt.

Die Permeationsmessung der Einzelgase wurde mit Hilfe der Druckanstiegsmethode durchgeführt, wobei sich die Permeanz hierbei aus dem linearen Druckanstieg über der Zeit ermitteln lässt.

Die Gemischgasmessungen wurden mit einem H₂/C₃H₈-Gemisch, bestehend aus 80 Vol.-% Wasserstoff und 20 Vol.-% Propan, bei einem Transmembrandruck von 1,5 bar (Feeddruck = 2,5, Permeat = 1,0 bar absolut) durchgeführt. Dabei wurde der Gesamtfluss mit Hilfe eines Gasblasenzählers gemessen und die Permeanzen mit Hilfe des Feed- und Permeatdruckes für H₂ und Propan aus der Zusammensetzung des Feeds, Retentates und Permeates berechnet. Die Permeanz gibt dem Fluss pro m² Membranfläche, Zeit und Druck, wobei als Druck die Partialdruckdifferenz (Triebkraft) des entsprechenden Gases eingesetzt wird. Die Permselektivität ergibt sich dann aus dem Verhältnis der beiden ermittelten Permeanzen.

**Tabelle 1**

| Membran | Einbrenn-Temperatur der Trägermembran | Precursor | Dicarbonsäure | | Vernetzer | Vernetzung | | Pyrolyse | | Einzelmessungen | | | Gemischmessung | |
|---|---|---|---|---|---|---|---|---|---|---|---|---|---|---|
| | | | (Mol %) | (Mol %) | Styrol | Temperatur | Dauer | Temperatur | Dauer | Permeanz (Nm³/m²/h/bar) | | | Permeanz (Nm³/m²/h/bar) | Permselektivität |
| | (°C) | | Ma | Pa | (Gew %) | (°C) | (h) | (°C) | (h) | H2 | C3 | SF6 | H2 | H2/C3 |
| IPES-1 | ungesintert | PES | 25 | 25 | 50 | 80 | 12,0 | 650 | 1,0 | 10,2 | 0,062 | 0,030 | 6,9 | 41 |
| PES-2 | 300 | PES | 25 | 25 | 50 | 80 | 12,0 | 700 | 1,0 | 4,7 | 0,007 | | 4,0 | 362 |
| PES-3 | 500 | PES | 25 | 25 | 50 | 80 | 12,0 | 650 | 1,0 | 6,8 | 0,006 | 0,002 | 5,6 | 418 |
| PES-4 | 500 | PES | 25 | 25 | 50 | 80 | 12,0 | 700 | 1,0 | 5,7 | 0,002 | | 4,8 | 68884 |
| PES-5 | 500 | PES | 7 | 43 | 50 | 80 | 12,0 | 700 | 1,0 | 4,6 | 0,069 | 0,034 | 3,1 | 19 |
| PES-6 | 500 | PES | 40 | 10 | 50 | 80 | 12,0 | 700 | 1,0 | 3,1 | 0,000 | 0,000 | 2,5 | 29703 |
| IPES-7 | 500 | PES | 25 | 25 | 50 | 80 | 4,5 | 750 | 1,0 | 2,3 | 0,001 | 0,000 | 3,1 | 767 |
| PES-8 | 500 | PES | 25 | 25 | 50 | 80 | 12,0 | 700 | 1,0 | 6,2 | 0,002 | 0,001 | 4,2 | 594 |
| PES-9 | 500 | PES | 25 | 25 | 50 | 250 | 1,0 | 750 | 1,0 | 7,6 | 0,006 | 0,003 | | |
| | | | | | | | | | | | | | | |
| PH-1 | ungesintert | PH (FB8001) | - | - | - | 150 | 3,0 | 800 | 1,0 | 10,24 | 0,258 | 0,322 | 7,4 | 25 |
| PH-2 | 300 | PH (FB8001) | - | - | - | 150 | 3,0 | 800 | 1,0 | 5,32 | 0,240 | 1,054 | 2,2 | 5 |
| PH-3 | 400 | PH (FB8001) | - | - | - | 150 | 3,0 | 800 | 1,0 | 5,30 | 0,029 | 0,036 | 3,0 | 29 |
| PH-4 | 500 | PH (FB8001) | - | - | - | 150 | 3,0 | 800 | 1,0 | 6,99 | 0,082 | 0,011 | 5,9 | 103 |
| PH-5 | 700 | PH (FB8001) | - | - | - | 150 | 3,0 | 800 | 1,0 | 2,51 | 0,003 | 0,018 | 1,6 | 84 |
| PH-6 | 900 | PH (FB8001) | - | - | - | 150 | 3,0 | 800 | 1,0 | 3,44 | 0,004 | 0,018 | 2,5 | 124 |

| | | | | | | | | | | | | | | |
|---|---|---|---|---|---|---|---|---|---|---|---|---|---|---|
| PES = Polyester PH (Typ) = Phenolharz Ma = Maleinsäureanhydrid Pa = Phthalsäureanhydrid | | | | | | | | | | | | | | |

### Beispiel 3, nicht erfindungsgemäß

Die Herstellung der Precusorlösung (Polyester: 25 Mol-% Maleinsäureanhydrid, 25 Mol-% Phthalsäureanhydrid und 50 Mol-% 1,2-Propandiol; Lösung: 50 Gew.-% PES und 50 Gew.-% Styrol), der für die Beschichtung eingesetzte Träger (oberste Zwischenschicht: Bohmitsol bei 500 °C gesintert), die Beschichtung mit der Precursorlösung, die Trocknung (24 h bei Raumtemperatur an Luft), die Vernetzung (12 h bei 80 °C in Luft), die finale Pyrolyse (1 h bei 650 °C in Ar) erfolgte wie im Beispiel 1 detailliert beschrieben.

Zur Untersuchung der Trenneigenschaften der Kohlenstoffmembranen wurden an einem Teststand Gemischgasmessungen bei Temperaturen zwischen 150 und 450 °C sowie bei Feed-Drücken zwischen 1 und 10 bar absolut durchgeführt. Die Messungen erfolgten mit einem H₂/C₃H₈-Gemisch, bestehend aus ca. 50 Vol.-% Wasserstoff und 50 Vol.-% Propan, der Permeatdruck betrug ca. 1 bar absolut. Gemessen wurden der Retentat- und Permeat-Gesamtfluss mit Hilfe von Gasuhren sowie die Gaszusammensetzung vom Feed, Retentat und Permeat mittels eines online Gaschromatographen. Daneben wurden die Drücke und Temperaturen aufgezeichnet. Die Berechnung der Einzelflüsse (Dimension = Nm³/h/m²; Nm = Normkubikmeter) erfolgte aus dem Gesamtfluss und der Zusammensetzung des Permeates. Die Permeanzen (Fluss normiert auf die Triebkraft, Dimension = Nm³/h/m²/bar, Triebkraft = Partialdruckdifferenz zwischen Feed/Retentat und Permeat) ergeben sich dann mit den Zusammensetzungen vom Feed/Retentat und vom Permeat sowie den zugehörigen Drücken. Die Permselektivität ergibt sich aus dem Verhältnis der beiden ermittelten Permeanzen.

Die Tabelle 2 zeigt die gemessenen und berechneten Daten der Membran unter verschiedenen Bedingungen:
I: Variation des Feed-/Retentatdruckes zwischen 2,6 und 10,2 bar absolut bei 300 °C
II: Variation der Temperatur zwischen 200 und 350 °C bei einem Feed-/Retentatdruck von 7,1 bar absolut.

Die Ergebnisse zeigen, dass bei konstanten Temperatur von 300 °C mit Zunahme des Transmembrandruckes (TMP = arithmetisches Mittel von Feed- und Retentatdruck minus Permeatdruck) die Wasserstoffpermeanz von 9,9 auf 5,9 Nm³/h/m²/bar und die Permselektivität von 930 auf 400 abnehmen.

Die Temperaturerhöhung bei einem konstanten Feed-/Retentatdruck von 7,1 bar absolut zeigt, dass sowohl der Fluss und die Permeanz vom Wasserstoff als auch die Wasserstoff zu Propan Permselektivität zunehmen.

**Tabelle 2**

| **I: Variation des Drucks** | | | | | | | | | | | | | | |
|---|---|---|---|---|---|---|---|---|---|---|---|---|---|---|
| Temperatur | Retentat Flux | Feed/Retentat | | | Permeat | | | | | | TMP | Permeanz P | | Permselektivität P(H2)/P(C3) |
| | | Druck | Konzentration | | Druck | Flux | Konzentration | | Flux | Flux | | | | |
| | | | C3 | H2 | | | C3 | H2 | C3 | H2 | | C3 | H2 | |
| (°C) | (Nm³/h) | (bar) | (vol%) | (vol%) | (bar) | (Nm³/h/m²) | (vol%) | (vol%) | (Nm³/h/m²) | (Nm³/h/m²) | (bar) | (Nm³/h/m²/bar) | | |
| 300 | 0,18 | 2,6 | 50,4 | 49,6 | 1,1 | 1,9 | 0,7 | 99,3 | 0,014 | 1,9 | 1,5 | 0,011 | 9,9 | 932 |
| 300 | 0,18 | 4,2 | 51,8 | 48,2 | 1,1 | 6,6 | 0,4 | 99,6 | 0,026 | 6,6 | 3,0 | 0,012 | 7,6 | 637 |
| 300 | 0,18 | 7,2 | 54,4 | 45,6 | 1,2 | 14,2 | 0,4 | 99,6 | 0,052 | 14,1 | 6,0 | 0,013 | 6,6 | 495 |
| 300 | 0,18 | 10,2 | 51,0 | 49,0 | 1,2 | 22,5 | 0,3 | 99,7 | 0,076 | 22,4 | 9,0 | 0,015 | 5,9 | 400 |
| | | | | | | | | | | | | | | |

| **II: Variation der Temperatur** | | | | | | | | | | | | | | |
|---|---|---|---|---|---|---|---|---|---|---|---|---|---|---|
| Temperatur | Retentat Flux | Feed/Retentat | | | Permeat | | | | | | TMP | Permeanz P | | Permselektivität P(H2)/P(C3) |
| | | Druck | Konzentration | | Druck | Flux | Konzentrat | | Flux | Flux | | | | |
| | | | C3 | H2 | | | C3 | H2 | C3 | H2 | | C3 | H2 | |
| (°C) | (Nm³/h) | (bar) | (vol%) | (vol%) | (bar) | (Nm³/h/m²) | (vol%) | (vol%) | (Nm³/h/m²) | (Nm³/h/m²) | (bar) | (Nm³/h/m²/bar) | | |
| 200 | 0,17 | 7,1 | 51,4 | 48,6 | 1,1 | 11,5 | 0,4 | 99,6 | 0,046 | 11,4 | 5,9 | 0,013 | 5,0 | 394 |
| 250 | 0,17 | 7,1 | 51,8 | 48,2 | 1,2 | 12,7 | 0,4 | 99,6 | 0,045 | 12,7 | 5,9 | 0,012 | 5,6 | 457 |
| 300 | 0,18 | 7,2 | 54,4 | 45,6 | 1,2 | 14,2 | 0,4 | 99,6 | 0,052 | 14,1 | 6,0 | 0,013 | 6,6 | 495 |
| 350 | 0,17 | 7,1 | 52,3 | 47,7 | 1,2 | 15,8 | 0,3 | 99,7 | 0,052 | 15,8 | 5,9 | 0,014 | 7,1 | 505 |

## Patentansprüche

1. Verfahren zur Herstellung von Kohlenstoffmembranen, die zur Gastrennung geeignet sind, umfassend die Schritte
a) Beschichten eines porösen Substrats, das eine oberflächliche mesoporöse, keramische Oxidschicht auf einer darunter liegenden Substratträgerschicht aufweist, mit einer Lösung mindestens eines organischen Polymers, das durch Pyrolyse in eine Kohlenstoffmembran überführt werden kann, wobei die oberflächliche mesoporöse, keramische Oxidschicht in ungebrannter Form mit der Lösung des mindestens einen organischen Polymers beschichtet wird, wobei die oberflächliche mesoporöse, keramische Oxidschicht aus ZrO₂, Al₂O₃ oder Mischungen daraus aufgebaut ist und als Polymer ethylenisch ungesättigte Polyester oder deren Gemische eingesetzt werden und zusätzlich ein vernetzendes ethylenisch ungesättigtes Monomer als Lösungsmittel und ein Radikalbildner als Vernetzungsinitiator eingesetzt werden,
b) Trocknen der Polymerbeschichtung auf dem porösen Substrat durch Entfernen des Lösungsmittels,
c) Pyrolysieren der Polymerbeschichtung auf dem porösen Substrat zur Ausbildung der Kohlenstoffmembran, die zur Gastrennung geeignet ist,
wobei jeder der Schritte a) bis c) oder die Sequenz der Schritte a) bis c) mehrfach durchgeführt werden kann und die Pyrolyse in Schritt c) bei einer Temperatur erfolgt, die höher als die Einbrenntemperatur des porösen Substrats ist, wobei erst in der nachfolgenden Pyrolyse die oberflächliche mesoporöse, keramische Oxidschicht eingebrannt wird und wobei die Pyrolyse in Schritt c) bei Temperaturen im Bereich von 500 bis 900 °C durchgeführt wird.

2. Verfahren nach Anspruch 1, **dadurch gekennzeichnet, dass** die oberflächliche mesoporöse, keramische Oxidschicht einen mittleren Porendurchmesser im Bereich von 2 bis 10 nm aufweist.

3. Verfahren nach einem der Ansprüche 1 oder 2, **dadurch gekennzeichnet, dass** die Substratträgeschicht ausgewählt ist aus porösen Metallen, porösen Keramiken, porösen Gläsern oder porösen Kompositen daraus.

4. Verfahren nach einem der Ansprüche 1 bis 3, **dadurch gekennzeichnet, dass** die oberflächliche mesoporöse, keramische Oxidschicht durch Sol-Gel-Technik hergestellt ist.

5. Verfahren nach einem der Ansprüche 1 bis 4, **dadurch gekennzeichnet, dass** die oberflächliche mesoporöse, keramische Oxidschicht aus γ-Al₂O₃ aufgebaut ist.

6. Verfahren nach einem der Ansprüche 1 bis 5, **dadurch gekennzeichnet, dass** der ethylenisch ungesättigte Polyester Wiederholeinheiten aliphatischer Diole, aromatischer Dicarbonsäuren und ethylenisch ungesättigter Dicarbonsäuren aufweist.

7. Verfahren nach Anspruch 6, **dadurch gekennzeichnet, dass** die aliphatischen Diole C₂₋₁₂-Alkandiole sind und die ethylenisch ungesättigte Dicarbonsäure Maleinsäure ist.

8. Verfahren nach einem der Ansprüche 1 bis 7, **dadurch gekennzeichnet, dass** das vernetzende, ethylenisch ungesättigte Monomer Styrol oder α-Methylstyrol ist.

## Claims

1. A process for producing carbon membranes suitable for gas separation, comprising the steps of:
a) coating a porous substrate having a surface mesoporous ceramic oxide layer atop a substrate carrier layer with a solution of at least one organic polymer which can be converted to a carbon membrane by pyrolysis, wherein the surface mesoporous ceramic oxide layer in unbaked form is coated with the solution of the at least one organic polymer, wherein the surface mesoporous ceramic oxide layer is formed from ZrO₂, Al₂O₃ or mixtures thereof, and the polymer used comprises ethylenically unsaturated polyesters or mixtures thereof and a crosslinking ethylenically unsaturated monomer is additionally used as solvent and a free-radical former as crosslinking initiator,
b) drying the polymer coating on the porous substrate by removing the solvent,
c) pyrolyzing the polymer coating on the porous substrate to form the carbon membrane suitable for gas separation,
wherein any of steps a) to c) or the sequence of steps a) to c) can be conducted more than once, and the pyrolysis in step c) is effected at a temperature higher than the baking temperature of the porous substrate, wherein the surface mesoporous ceramic oxide layer is baked only in the subsequent pyrolysis, and wherein the pyrolysis in step c) is performed at temperatures in the range from 500 to 900°C.

2. The process according to claim 1, wherein the surface mesoporous ceramic oxide layer has a mean pore diameter in the range from 2 to 10 nm.

3. The process according to either of claims 1 and 2, wherein the substrate carrier layer is selected from porous metals, porous ceramics, porous glasses and porous composites thereof.

4. The process according to any of claims 1 to 3, wherein the surface mesoporous ceramic oxide layer has been produced by a sol-gel technique.

5. The process according to any of claims 1 to 4, wherein the surface mesoporous ceramic oxide layer has been formed from γ-Al₂O₃.

6. The process according to any of claims 1 to 5, wherein the ethylenically unsaturated polyester has repeat units of aliphatic diols, aromatic dicarboxylic acids and ethylenically unsaturated dicarboxylic acids.

7. The process according to claim 6, wherein the aliphatic diols are C₂₋₁₂-alkanediols and the ethylenically unsaturated dicarboxylic acid is maleic acid.

8. The process according to any of claims 1 to 7, wherein the crosslinking ethylenically unsaturated monomer is styrene or α-methylstyrene.

## Revendications

1. Procédé de fabrication de membranes de carbone appropriées pour la séparation de gaz, comprenant les étapes suivantes :
a) le revêtement d'un substrat poreux, qui comprend une couche d'oxyde céramique mésoporeuse superficielle sur une couche support de substrat sous-jacente, avec une solution d'au moins un polymère organique qui peut être transformé en une membrane de carbone par pyrolyse, la couche d'oxyde céramique mésoporeuse superficielle étant revêtue sous forme non cuite avec la solution dudit au moins un polymère organique, la couche d'oxyde céramique mésoporeuse superficielle étant formée par ZrO₂, Al₂O₃ ou leurs mélanges, et des polyesters éthyléniquement insaturés ou leurs mélanges étant utilisés en tant que polymère, et un monomère éthyléniquement insaturé réticulant étant en outre utilisé en tant que solvant et un agent de formation de radicaux en tant qu'initiateur de réticulation,
b) le séchage du revêtement polymère sur le substrat poreux par élimination du solvant,
c) la pyrolyse du revêtement polymère sur le substrat poreux pour former la membrane de carbone appropriée pour la séparation de gaz,
chacune des étapes a) à c) ou la séquence des étapes a) à c) pouvant être réalisées à plusieurs reprises, et la pyrolyse à l'étape c) ayant lieu à une température qui est supérieure à la température de cuisson du substrat poreux, la couche d'oxyde céramique mésoporeuse superficielle n'étant cuite que lors de la pyrolyse ultérieure et la pyrolyse à l'étape c) étant réalisée à des températures dans la plage allant de 500 à 900 °C.

2. Procédé selon la revendication 1, **caractérisé en ce que** la couche d'oxyde céramique mésoporeuse superficielle présente un diamètre de pores moyen dans la plage allant de 2 à 10 nm.

3. Procédé selon l'une quelconque des revendications 1 ou 2, **caractérisé en ce que** la couche support de substrat est choisie parmi les métaux poreux, les céramiques poreuses, les verres poreux ou les composites poreux de ceux-ci.

4. Procédé selon l'une quelconque des revendications 1 à 3, **caractérisé en ce que** la couche d'oxyde céramique mésoporeuse superficielle est fabriquée par une technique sol-gel.

5. Procédé selon l'une quelconque des revendications 1 à 4, **caractérisé en ce que** la couche d'oxyde céramique mésoporeuse superficielle est formée par de l'γ-Al₂O₃.

6. Procédé selon l'une quelconque des revendications 1 à 5, **caractérisé en ce que** le polyester éthyléniquement insaturé comprend des unités de répétition de diols aliphatiques, d'acides dicarboxyliques aromatiques et d'acides dicarboxyliques éthyléniquement insaturés.

7. Procédé selon la revendication 6, **caractérisé en ce que** les diols aliphatiques sont des alcanediols en C₂₋₁₂ et l'acide dicarboxylique éthyléniquement insaturé est l'acide maléique.

8. Procédé selon l'une quelconque des revendications 1 à 7, **caractérisé en ce que** le monomère éthyléniquement insaturé réticulant est le styrène ou l'α-méthylstyrène.
